(19) **Europäisches Patentamt European Patent Office Office européen des brevets**

(11) **EP 4 187 388 B1**

(12) **FASCICULE DE BREVET EUROPEEN**

(45) Date de publication et mention de la délivrance du brevet:
**20.08.2025 Bulletin 2025/34**

(21) Numéro de dépôt: **21306637.6**

(22) Date de dépôt: **25.11.2021**

(51) Classification Internationale des Brevets (IPC):
***G06F 11/30*** (2006.01)   ***G06F 11/34*** (2006.01)

(52) Classification Coopérative des Brevets (CPC):
**G06F 11/3466; G06F 11/302; G06F 11/3419; G06F 11/3452;** G06F 2201/865

(54) **PROCEDE ET DISPOSITIF DE DETECTION DE COMPORTEMENT ABERRANT DANS UN ENSEMBLE D'EXECUTIONS D'APPLICATIONS LOGICIELLES**

VERFAHREN UND VORRICHTUNG ZUR ERKENNUNG VON ABWEICHENDEM VERHALTEN IN EINER REIHE VON SOFTWAREANWENDUNGSAUSFÜHRUNGEN

METHOD AND DEVICE FOR DETECTING ABERRANT BEHAVIOUR IN A SET OF EXECUTIONS OF SOFTWARE APPLICATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**31.05.2023 Bulletin 2023/22**

(73) Titulaires:
- **Bull SAS**
  **78340 Les Clayes-sous-Bois (FR)**
- **Commissariat à l'Energie Atomique et aux Energies Alternatives**
  **75015 Paris (FR)**

(72) Inventeurs:
- **VINCENT, Lionel**
  **38320 Brié-et-angonnes (FR)**

- **MIMOUNI, Salim**
  **38100 Grenoble (FR)**
- **PHAM, Trong Ton**
  **38000 Grenoble (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A1- 2006 020 924**   **US-A1- 2021 349 897**

- **FREIN RUAIRI DE: "State Acquisition in Computer Networks", 2018 IFIP NETWORKING CONFERENCE (IFIP NETWORKING) AND WORKSHOPS, IFIP, 14 May 2018 (2018-05-14), pages 1 - 9, XP033540884, DOI: 10.23919/ IFIPNETWORKING.2018.8696390**

**Description**

DOMAINE DE L'INVENTION

La présente invention est relative au profilage d'applications logicielles exécutées sur un dispositif de traitement de l'information, en particulier afin de détecter des comportements aberrants parmi les exécutions.

Elle s'applique en particulier au domaine du calcul à haute performance sur des supercalculateurs.

CONTEXTE DE L'INVENTION

Certaines applications logicielles impliquent des quantités de traitement extrêmement importantes, en raison du volume de données à traiter et/ou de la complexité des traitements à effectuer sur ces données.

A titre d'exemples, on peut citer les applications de prévisions météorologiques, les applications de traitement d'images numériques, par exemple d'imagerie médicale, les applications de simulation physique (calculs de résistance des matériaux, calculs aérodynamiques...), l'apprentissage de réseaux de neurones, les applications de modélisation d'objets chimiques (calcul de structures et de propriétés, modélisation moléculaire...), les applications de simulations financières ou en assurance, les applications de cryptanalyse, etc.

Dans certains cas, les applications obéissent en outre à des contraintes de temps réels ou de quasi-temps réel.

Un enjeu est dès lors de réduire et maîtriser les temps de calcul pour ces applications. Pour ce faire, celles-ci peuvent être exécutées sur des dispositifs de traitement de l'information puissants, tels des supercalculateurs. Les utilisateurs peuvent ainsi choisir d'exécuter leur application sur un dispositif de traitement, généralement distant, par le truchement d'un réseau de télécommunication.

Un superordinateur ou supercalculateur est un ordinateur conçu pour atteindre les plus hautes performances possibles avec les techniques connues lors de sa conception, en particulier en ce qui concerne la vitesse de calcul. La science des superordinateurs est appelée « calcul haute performance » (en anglais : « *high-performance computing* » ou HPC).

Toutefois, les dispositifs de traitement de l'information, et notamment les supercalculateurs, sont des systèmes complexes, et les interactions entre les applications logicielles et ceux-ci sont encore complexifiés par les multiples paramètres de configuration des applications et du dispositif de traitement, ainsi que par la concurrence entre les différentes applications exécutées simultanément sur un même dispositif de traitement.

Aussi, les utilisateurs font souvent face à une efficacité de leurs applications inférieure à ce qu'ils attendaient.

Des outils d'analyse de l'exécution des applications ont été proposés pour permettre d'essayer de comprendre les problèmes éventuels, et notamment les goulots d'étranglement qui pénalisent le temps d'exécution de tout ou partie des applications.

Des outils de profilage permettent de recueillir des mesures de certains paramètres lors de l'exécution d'une application.

Par exemple, le profilage de code permet d'obtenir des mesures, lors de l'exécution d'une application, comportant la liste des fonctions appelées et le temps passé dans chacune d'elle, l'utilisation du/des processeur(s), l'utilisation de la mémoire, etc. Le profilage de code peut être typiquement implémenté par instrumentation du code source en y rajoutant des instructions.

Des outils de profilage d'entrée/sortie ont également été proposés, comme par exemple l'outil « Bull IO Instrumentation ». Cet outil fait partie d'une suite comportant d'autres outils qui, en aval, permettent d'analyser les mesures recueillies par l'outil de profilage.

Toutefois ces outils ciblent essentiellement le profilage des exécutions des applications.

Or, selon les inventeurs, il serait également intéressant de profiler les applications elles-mêmes, afin d'en déduire des conclusions sur leur comportement et permettre ainsi d'affiner des paramètres d'exécution pour l'application. L'art antérieur US 2006/020924 A1 (LO KEVIN H [US] ET AL) 26 janvier 2006 décrit un système permettant de surveiller et comparer des séries de mesures de performance (footprints) d'une application à une trace de référence (baseline), afin de détecter d'éventuels comportements anormaux.

RESUME DE L'INVENTION

Un objectif de la présente invention est de fournir une solution palliant au moins partiellement cette insuffisance de l'état de la technique. En particulier, l'invention vise à détecter les comportements aberrants parmi les différentes exécutions d'une même application.

L'invention est définie par les revendications indépendantes attachées.

les exécutions pour lesquelles une aberration a été détectée

D'autres caractéristiques et avantages de l'invention apparaîtront à la lecture de la description qui suit d'un mode de réalisation préféré de l'invention, donnée à titre d'exemple et en référence aux dessins annexés

BREVE DESCRIPTION DES FIGURES

Les dessins annexés illustrent l'invention :

La figure 1 représente schématiquement un exemple d'organigramme selon un mode de réalisation de l'invention.

La figure 2 illustre des exemples d'activités de 3 exécutions d'une même application, selon un mode de réalisation de l'invention

DESCRIPTION DETAILLEE DE MODES DE REALISATION DE L'INVENTION

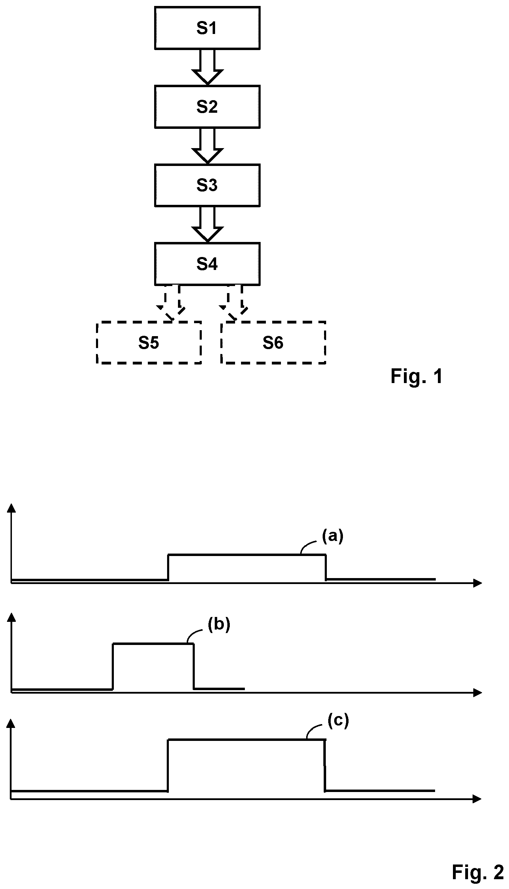

La figure 1 illustre un organigramme selon un mode de réalisation de l'invention. Cet organigramme est illustratif et vise avant tout à mieux expliquer l'invention.

Dans une étape S1, des exécutions d'applications sont déclenchées en collaboration avec un outil de profilage. Une ou plusieurs applications distinctes peuvent faire l'objet d'une ou plusieurs exécutions chacune.

On peut appeler « *job* », ces exécutions d'une application. En informatique, le terme anglais « job » (qui est difficile à traduire en français sans contresens) peut être considéré comme une unité de travail ou d'exécution de ce travail. Un job associe donc l'identification d'une application et l'identification des éléments contextuel de son application : le contexte matériel sous-jacent (les ressources d'exécution : nœuds du supercalculateur...) et les données à traiter.

Différents outils de profilage peuvent être utilisés, afin de recueillir, pour chaque exécution d'une application, au moins une série temporelle de points de mesure.

Un outil peut par exemple être le profileur d'entrée/sortie « Bull IO Instrumentation ». Cet outil est décrit sur la page web de la société Atos : http://www.atos.net

Bull IO Instrumentation est un outil de profilage intuitif qui aide les administrateurs système, les développeurs et les experts du support produit à analyser l'activité d'E/S générée par les tâches HPC. Un contrôle d'accès basé sur les rôles est inclus pour fournir différents niveaux d'information à divers groupes d'utilisateurs prédéfinis : administrateurs système, opérateurs ou utilisateurs réguliers. Cet outil collecte, stocke et affiche un ensemble de métriques liées aux entrées-sorties à travers une interface graphique très ergonomique.

D'autres outils de profilage sont également utilisables. L'invention est en fait indépendante de l'outil de profilage utilisé, du moment que celui-ci puisse générer des séries temporelles de valeurs de paramètres représentatives du comportement des exécutions des applications.

On peut par exemple citer l'outil BEO, « *Bull Energy Optimizer* », ou l'outil BDPO, « *Bull Dynamic Power Optimization* », qui sont spécialisés dans le profilage de la consommation énergétique de l'ensemble des composants de la plateforme de traitement de l'information (CPU, système de fichiers...) afin de permettre son optimisation.

Il existe d'autres outils propriétaires également comme LLView, proposé par le Julich Supercomputer Center, et des outils en source ouvert comme Prometheus.

Chaque point de mesure associe une valeur au paramètre, ou métrique, mesurée.

Les points de mesure sont classiquement espacés d'un intervalle qui peut être constant et préalablement fixé. La valeur du point de mesure est alors représentative de cet intervalle de temps. Cet intervalle de temps peut être dimensionné selon un compromis permettant à la fois de suivre finement l'évolution du paramètre mesuré au cours du temps mais aussi pour ne pas surcharger le système en engrangeant trop de mesures. Un exemple classique d'intervalle de temps est 5 secondes

De nombreux types de paramètres peuvent être ainsi surveillés et faire l'objet de mesure.

Ces paramètres peuvent concerner différents aspects du comportement des exécutions, ou jobs.

En particulier, ces paramètres peuvent concerner les entrées et sorties des exécutions d'application. En effet, il est noté que les applications HPC (« *High Performance Computing* ») consacrent une partie importante de leur temps d'exécution à effectuer des entrées/sorties. Les volumes de données qui sont traités représentent en eux-mêmes une cause importante des problèmes de performance des exécutions d'applications : les réseaux utilisés pour échanger les données autant une bande passante finie, les temps de lecture et d'écriture ne pourront être inférieur à un minimum théorique. D'autres facteurs peuvent avoir en outre un impact significatif. Par exemple, l'exécution concurrente de deux applications ou d'une même application peut entraîner des conflits d'accès à des ressources de stockage communes qui impacte performances. La façon dont une application donnée effectue ses entrées/sorties peut également impacter la performance de façon très importante dans le cas où elle sature des équipements de stockage en demandant le traitement d'un très grand nombre de petites opérations.

La mesure de paramètres représentatifs des entrées/sorties des exécutions des applications fournit donc un bon indicateur des performances des applications.

Là encore différents paramètres d'entrée sortie peuvent être exploités, et l'invention est indépendante du type de paramètres. Ceux-ci dépendent essentiellement de l'outil de profilage et du type d'applications et de dispositif de traitement de l'information. A titre d'exemples non limitatifs, on peut citer le volume d'entrée/sortie en lecture, le volume d'entrée/sortie en écriture, le temps d'entrée/sortie en lecture, le temps d'entrée/sortie en écriture, etc.

Pour un paramètre mesuré donné, la succession des valeurs capturées au fil du temps forme une série temporelle.

En général, plusieurs mesures sont effectuées simultanément, sur autant de paramètres.

Ainsi qu'indiqué dans la page Wikipédia, « une série temporelle, ou série chronologique, est une suite de valeurs numériques représentant l'évolution d'une quantité spécifique au cours du temps »

(source : https://fr.wikipedia.org/wiki/Série temporelle)

Lorsque plusieurs exécutions d'applications ont lieu en même temps, on peut recueillir un ensemble de série temporelle, chacune associée à une exécution d'application donnée.

Un enjeu est de déterminer, à partir de ces séries temporelles, un comportement de ces applications afin, notamment, de mieux comprendre les problématiques sous-jacentes et d'améliorer les conditions de leurs exécutions ultérieures pour optimiser les performances.

Toutefois, il s'avère en pratique que chaque exécution d'une même application peut faire l'objet d'un contexte d'exécution distinct.

En effet, au moins deux situations peuvent se présenter qui influent sur son comportement propre, et donc sur les séries temporelles respectives.

Tout d'abord, en fonction des instants auxquelles l'exécution d'une application est déclenchée, les ressources disponibles du dispositif de traitement de l'information peuvent être distinctes. Par exemple, dans le cas où le dispositif de traitement de l'information est un supercalculateur partagé entre plusieurs clients, celui-ci est plus ou moins chargé en fonction des requêtes des clients.

Dès lors, une première exécution d'une application pourra être déclenchée sur un premier ensemble de ressources (par exemple 10 nœuds du supercalculateur), tandis qu'une seconde exécution de la même application pourra être déclenchée sur un second ensemble de ressources (par exemple 2 nœuds du supercalculateur).

D'autre part, deux exécutions d'une même application peuvent être déclenchées sur un volume différent de données. Par exemple, une application prenant en entrée des images numériques peut être exécuté avec des images de résolutions très différentes. Dès lors, les séries temporelles relatives aux mesures des paramètres d'entrée/sorties auront des valeurs substantiellement différentes.

Pour au moins ces raisons, les propositions de l'état de la technique ne permettent pas de déterminer, à partir des séries temporelles de chaque exécution, un comportement nominal pour l'application, qui serait invariant (ou peu variant) par rapport aux contextes de chaque exécution.

Il s'ensuit que ces propositions de l'état de la technique ne peuvent permettre ni de détecter ni un comportement aberrant d'une exécution en particulier, ni de déclencher des actions sur la base d'un tel comportement nominal.

La figure 2 illustre cette situation et permet de mieux comprendre l'influence du contexte d'exécution.

Chacune des trois courbes représente une série temporelle relative à un même paramètre d'entrée/sortie pour 3 exécutions distinctes d'une même application.

Dans cet exemple, les trois courbes montrent un même comportement général :

- une première phase durant laquelle le paramètre mesuré a une valeur basse (l'application est occupée à effectuer du traitement internet et pas ou peu d'entrées/sorties).

- une deuxième phase, durant laquelle le paramètre mesuré a une valeur haute (l'application effectue des entrées/sorties)

- une troisième phase durant laquelle le paramètre mesuré a une valeur basse (l'application est occupée à effectuer du traitement internet et pas ou peu d'entrées/sorties.

La courbe (a) représente une exécution de référence : l'application effectue un traitement interne de 20 minutes, puis des entrées/sorties pendant 20 minutes avec un volume de 10 GB, puis à nouveau un traitement interne de 20 minutes.

La courbe (b) représente une exécution sur des ressources doublées (deux fois plus de nœuds du supercalculateur) : l'application effectue un traitement interne de 10 minutes, puis des entrées/sorties pendant 10 minutes avec un volume de 10 GB, puis à nouveau un traitement interne de 10 minutes.

La courbe (c) représente une exécution sur des ressources identiques à celles de la courbe (a) mais avec des données doubles : l'application effectue un traitement interne de 20 minutes, puis des entrées/sorties pendant 20 minutes avec un volume de 20 GB, puis à nouveau un traitement interne de 20 minutes.

Les méthodes de l'état de la technique visant à comparer des exécutions sur la base de séries temporelles de paramètres d'exécution mesurés consistent à calculer des distances entre ces séries temporelles.

Or, en mesurant la distance entre n'importe quelle paire de séries temporelles (a), (b), (c), on n'obtient pas une valeur nulle, ni même une valeur constante. Aussi, mesurer une telle distance ne permet pas aisément de déterminer un éventuel comportement aberrant entre les différentes exécutions d'une même application.

Par exemple, l'algorithme DTW pour « *Dynamic Time Warping* » (déformation temporelle dynamique) est un algorithme permettant de mesurer la similarité entre deux suites qui peuvent varier au cours du temps. Il a été exploité en vidéo, audio, graphique par ordinateur, bioinformatique... et peut être appliqué dans toute situation où les données peuvent être transformées en une représentation linéaire. Une application célèbre est l'application en reconnaissance automatique de la parole, où il est nécessaire de tenir compte de vitesses d'élocution très variables.

De façon générale, DTW est une méthode qui recherche un appariement optimal entre deux séries temporelles, sous certaines restrictions. Les séries temporelles sont déformées par transformation non linéaire de la variable temporelle, pour déterminer une mesure de leur similarité, indépendamment de certaines transformations non linéaires du temps.

Cet algorithme peut être utilisé pour calculer une distance entre deux séries temporelles qui prenne en compte une échelle temporelle ou un décalage de phase.

Toutefois, l'algorithme DTW est très sensible aux différences de valeurs entre les séries temporelles. Ainsi, dans l'exemple de la figure 2, les valeurs sont très différentes entre les courbes (a) et (b), ainsi qu'entre les courbes (a) et (c), de sorte que les distances respectives entre (a) et (b) et entre (a) et (c), selon l'algorithme DTW, seront importantes.

Autrement dit, l'algorithme DTW ne permet pas de minimiser une distance entre les séries temporelles appartenant à des exécutions d'une même application. Il apparaît donc que l'algorithme DTW ne permettrait pas de déterminer un comportement aberrant d'une exécution, et ne permettrait donc pas de déterminer un ensemble cohérent d'exécution pour déterminer un comportement nominal, ou invariant, propre à l'application elle-même.

Par ailleurs, l'algorithme DTW est un algorithme complexe qui nécessite la construction d'une matrix N1xN2, où N1 et N2 sont les nombres de points de mesure dans les deux séries temporelles dont on calcule la distance. Aussi, le calcul d'une distance selon l'algorithme DTW engendre une complexité calculatoire en $o(N^2)$, ainsi qu'un encombrement mémoire également en $o(N^2)$.

Un aspect de l'invention consiste à déterminer une façon de calculer la distance entre deux séries temporelles qui soit réellement représentative du comportement de l'application sur la durée et peu sensible aux fluctuations de valeurs ou de durée engendrées par la disponibilité des ressources de calcul ou par le volume des données à traiter.

Pour ce faire, il est proposé une étape S2 de formatage des séries temporelles obtenues pour l'ensemble d'exécutions, en ajustant, pour chaque série temporelle, sa longueur, ses valeurs et son nombre de points de mesures. Cet ajustement consister à modifier la longueur et/ou les valeurs et/ou le nombre de points d'une ou plusieurs séries temporelles afin de les faire concorder avec la longueur et/ou les valeurs et/ou le nombre de points d'une série temporelle donnée (dite « de référence »).

Selon un mode de réalisation préférentielle, le formatage est effectué par couples de série temporelle au sein de cet ensemble.

Alternativement, il est possible de procéder d'un coup sur l'ensemble des exécutions. Toutefois, une telle façon de faire est moins efficace car plus couteuse en termes de temps d'exécution).

Un premier ajustement concerne la longueur des séries temporelles.

En effet, chaque série temporelle peut avoir un nombre de points de mesure variable : cette variabilité peut être inhérente au type de paramètre mesuré, mais aussi aux réglages de l'outil de profilage. Il peut être possible par exemple d'indiquer des intervalles entre points de mesure différents selon les paramètres mesurés.

Les séries temporelles pouvant donc avoir des longueurs variables, afin de mieux pouvoir les comparer, on peut les normaliser sur un intervalle de référence. Cet intervalle de référence peut être l'intervalle d'une des séries temporelles (la plus courte, par exemple), ou bien un intervalle « neutre », par exemple [0 ; 1].

Toute série temporelle de longueur n ('n' étant le nombre de points de mesure) peut ainsi être ajustée en projetant chaque point de mesure de cette série vers un intervalle de référence.

Si l'on prend l'exemple d'un intervalle de référence [0 ;1] et si l'on suppose que les points de mesure sont équidistants dans le temps (c'est-à-dire obéissent à une mesure périodique d'un paramètre), on peut écrire que la série temporelle ajustée est l'ensemble :

$$\{t_j\}_{j=1}^{n}, \text{ avec } t_j = \frac{j-1}{n-1}$$

avec n, le nombre de points de mesure, et
$t_j$ le point de mesure j, avec $j \in [1; n]$ et j un nombre entier.

Un deuxième ajustement concerne les valeurs des séries temporelles.

Cet ajustement peut être vu comme une normalisation des valeurs des séries temporelles.

Plusieurs façons de faire sont envisageables. Par exemple, il est possible de normaliser les valeurs en les projetant sur un intervalle de référence, en attribuant les valeurs haute et basse de cet intervalle aux valeurs, respectivement, maximale et minimale des séries temporelles comparées.

Selon un mode de réalisation, on normalise les valeurs de chaque série temporelle par une quantité totale correspondant à l'ensemble des valeurs pour cette série temporelle. Selon un mode de réalisation, cette quantité est une approximation de l'intégrale de la série temporelle par rapport au temps.

Cette quantité peut être calculée comme la somme de l'ensemble de ces valeurs. Cette quantité ainsi calculée forme une approximation de l'intégrale de la série temporelle (c'est-à-dire, graphiquement, la surface sous la courbe fournissant les valeurs pour chaque point de mesure).

Si les séries temporelles à comparer ne partagent pas un même taux d'échantillonnage (période entre deux points de mesure), on peut utiliser des méthodes plus précises pour estimer l'intégrale de la série temporelle. A titre d'exemples, on peut citer la méthode de Simson ou la méthode des trapèzes. De nombreuses autres méthodes existent, permettant d'approximer une intégrale. La page Wikipédia relative au calcul numérique d'une intégrale en liste un certain nombre :
https://fr.wikipedia.org/wiki/Calcul numérique d'une intégrale

Dans le cas d'une série temporelle multivaluée, c'est-à-dire associant plusieurs valeurs à un même point de mesure, chaque valeur doit être prise séparément pour être normalisée avec la quantité intégrale associée.

Un troisième ajustement concerne le nombre de points des séries temporelles.

Même si les séries temporelles ont été ajustées en longueur, elles peuvent toutefois avoir un nombre de points de mesure différents. Afin de pouvoir comparer deux séries temporelles, et de calculer une métrique entre elle, comme une distance, on ajuste le nombre de point.

Pour ce faire, on effectue une interpolation d'un ensemble de points de mesures supplémentaires afin que le nombre de points de mesure de la série temporelle soit égale au nombre de points de mesure d'une série temporelle plus longue de l'ensemble des exécutions de l'application considérée.

Autrement dit, si on considère deux séries temporelles, la série temporelle la plus courte est interpolée afin d'obtenir un nombre de points de mesure égal à celui de la série temporelle la plus longue, en ajoutant des points de mesures supplémentaires « artificiels » (c'est-à-dire calculés et non pas mesurés).

Ces points de mesure supplémentaires ne doivent pas ajouter d'information ou modifier le contenu sémantique de la série temporelle. Aussi, ces points de mesures supplémentaires doivent se situer sur la courbe de la série temporelle.

Selon un mode de réalisation, on remplace les points de mesure des séries temporelles à ajuster par ces points de mesure supplémentaires qui ont pour abscisses celles de la série temporelle la plus longue. De cette façon, les abscisses de toutes les séries temporelles sont identiques.

Différentes techniques d'interpolation existent et pourront être utilisées pour cette étape d'ajustement.

Notamment, la valeur à attribuer à un point de mesure interpolé peut être déterminé par une fonction qui peut localement approximer la courbe de la série temporelle.

Par exemple, si la courbe a un comportement sinusoïdal, on peut utiliser une spline ou une approximation polynomiale pour localement approximer la courbe et déterminer la valeur du point supplémentaire.

Si les valeurs varient peu sur un intervalle autour du point supplémentaire, une interpolation linéaire peut être suffisante pour déterminer la valeur de ce point supplémentaire.

Après cette étape de formatage S2, on peut mesurer une similarité entre deux séries temporelles indépendamment des transformations linéaires sur les échelles x (temps) et y (valeurs) de chacune d'elle.

Autrement dit, les séries temporelles ainsi normalisées ne sont plus sensibles à l'influence des volumes de données différents pour différentes exécutions d'une même application, ou de ressources de calcul différentes.

Dans une étape S3, on effectue un calcul d'une métrique entre deux séries temporelles parmi les séries temporelles recueillies pour l'ensemble d'exécutions. Cette métrique vise à quantifier une dissimilarité entre séries temporelles et peut notamment prendre la forme d'une distance entre séries temporelles.

Du fait des ajustements effectués précédemment, la métrique est normalement minimale pour des exécutions correspondant à une même application.

Par conséquent, ce calcul de métrique peut permettre, dans une étape S4, de détecter une aberration au sein de l'ensemble d'exécution.

En effet, si une série temporelle d'une exécution possède une métrique (ou distance, par exemple) trop importante avec les séries temporelles des autres exécutions de la même application, alors on peut estimer que cette exécution possède un comportement aberrant.

Pour rappel, en statistique, une donnée aberrante (en anglais « *outlier* ») est une valeur ou une observation qui est « distante » des autres observations effectuées sur le même phénomène, c'est-à-dire qu'elle contraste grandement avec les valeurs « normalement » mesurées.

Cette aberration peut correspondre à un dysfonctionnement de l'application lors de cette exécution, ou bien d'un dysfonctionnement du contexte d'exécution ou de l'outil de profilage. Quoiqu'il en soit, la ou les séries temporelles correspondant à cette exécution doivent être considérés comme non représentatives de l'application.

Aussi, la détection d'une aberration permet au moins deux actions :

- alerter l'utilisateur sur cette aberration
- exclure l'exécution correspondante dans la détermination d'un comportement nominal pour l'application.

Différentes distances peuvent être utilisées, en étape S4, pour permettre la détection d'une exécution aberrante à partir des séries temporelles. À titre d'exemples non exhaustifs et bien connus de l'homme du métier, on peut citer :

- la distance euclidienne, ou L2,
- la distance L1,
- la distance de Miwkovski,
- la distance de Manhattan,
- la distance Cosinus,
- la distance de Chebyshev , etc.

Selon un mode de réalisation de l'invention, la distance est calculée sur les sommes cumulées des valeurs des séries temporelles.

On peut écrire ce calcul par l'expression suivante :

$$d(t1;t2) = d\left(\left\{\sum_{i=1}^{j} t1_i\right\}_j, \left\{\sum_{i=1}^{j} t2_i\right\}_j\right)$$

dans laquelle :

- $d(t1;t2)$ représente la distance entre les deux séries temporelles t1 et t2 ;

- $t1_i$ et $t2_i$ représentent la i$^{\text{ème}}$ valeur de, respectivement, la série temporelle t1 et la série temporelle t2 ;

- $\sum_{i=1}^{j} t1_i$ et $\sum_{i=1}^{j} t2_i$ forment donc les sommes cumulées au rang j des valeurs des séries temporelles t1 et t2, respectivement,

- la distance $d(t1; t2)$ s'exprime alors comme une distance 'd' entre les deux ensembles de valeurs (exprimées par les accolades courbes) formées par ces sommes cumulées.

Sur la base de ces sommes cumulées, il est possible d'appliquer une fonction de distance d, afin d'obtenir une valeur de distance entre deux séries temporelles.

Par exemple, il est possible d'évaluer la moyenne des valeurs absolues des différences entre les valeurs des séries temporelles de même rang j dans les deux séries. Autrement dit :

$$d(t1;t2) = \frac{1}{N}\sum_{j=1}^{N}\left\|\sum_{i=1}^{j} t1_i - \sum_{i=1}^{j} t2_i\right\|$$

Dans certains cas, les séries temporelles sont multivariées, c'est-à-dire associant une pluralité de valeurs à un même point de mesure. Autrement dit, on peut associer à une même exécution d'une application, une série temporelle regroupant plusieurs mesures de paramètres.

Le procédé décrit ci-dessous conserve sa validité dans ce cas.

Dans l'étape S3, le calcul d'une métrique entre deux séries temporelles peut être réalisé en calculant les métriques (tel que précédemment décrit) pour chaque composante des séries temporelles, puis en calculant une métrique globale combinant ces différentes distances.

Ainsi, si les séries temporelles t1, t2 associent à chaque point de mesure X valeurs $t_{11}$, $t_{12}$... $t_{1x}$, respectivement $t_{21}$, $t_{22}$... $t_{2x}$, on peut calculer x distances $d_k$ de composants par :

$$d_k(t1;t2) = d\left(\left\{\sum_{i=1}^{j} t1_{ki}\right\}_j, \left\{\sum_{i=1}^{j} t2_{ki}\right\}_j\right)$$

On peut ensuite calculer une distance globale à partir de ces x distance $d_k(t1 ; t2)$ de différente façons, par exemple par une distance de Minkowski.

Plus particulièrement, on peut combiner les distances par composants comme autant de coordonnées orthogonales, de sorte que la distance global d(t1 ; d2) peut s'exprimer :

$$d(t1;t2) = \sqrt{\sum_{k=1}^{x}\left(d_k(t1;t2)\right)^2}$$

A partir de cette distance, on peut détecter une aberration au sein des séries temporelles recueillis et donc des exécutions d'applications ayant des comportements aberrants.

Par exemple, on peut calculer des distances entre plusieurs couples (éventuellement tous) de séries temporelles obtenues pour les différentes exécutions d'une même application.

Si une distance est supérieure à un seuil, alors une des deux séries temporelles concernées peut être considérée comme aberrante. En recoupant plusieurs distances calculées, on peut discriminer laquelle est effectivement aberrante. Si une distance est supérieure à un seuil et si on a déjà établi qu'une des deux séries temporelles possède des distances inférieures au seuil par rapport à d'autres séries, alors on peut directement en déduire que l'autre série est une série temporelle aberrante.

Le seuil peut être prédéfini mais peut aussi est auto-adaptatif en fonction des différentes valeurs de distances obtenues.

Dans une étape S5, de l'information sur l'exécution correspondant à la série temporelle aberrante peut être fournie vers un utilisateur via une interface homme-machine. Par exemple, cette information peut contenir des données identifiant cette exécution et son contexte d'exécution (nom de l'application, date d'exécution, paramètres d'exécutions fixés par l'utilisateur, volume de données traité, etc.). L'utilisateur peut alors rechercher la cause de cette exécution aberrante, afin d'éventuellement ne pas prendre en compte les résultats de cette exécution et/ou remédier aux problèmes sous-jacents.

Par ailleurs, dans une étape S6, on peut déterminer automatiquement des paramètres d'optimisation d'exécution pour l'application, à partir des exécutions d'une même application en excluant les exécutions pour lesquelles une aberration a été détectée.

En effet, une fois écartée les séries temporelles aberrantes, les séries temporelles restantes permettent de décrire le comportement normal de l'application. Sur la base de comportement normal, on peut automatiquement déterminer comment optimiser les exécutions ultérieures de l'application.

Également, il peut être prévu une étape de sélection d'un module d'accélération pour une application, à partir des exécutions d'une même application en excluant les exécutions pour lesquelles une aberration a été détectée.

Comme précédemment expliqué, une fois écartée les séries temporelles aberrantes, les séries temporelles restantes permettent de décrire le comportement normal de l'application. Sur la base de comportement normal, on peut automatiquement sélection un module d'accélération parmi un catalogue de modules disponibles. Chacun des modules disponibles peut en effet avoir des conditions d'applications particulières et la sélection vise à déterminer quels modules disposent des conditions d'applications qui correspondent au mieux au comportement normal de l'application.

Par exemple, le module d'accélération « Small Read Optimizer » (SRO) de la société Atos est par exemple décrit sur le site web de la société ou dans des articles tels que Robert, Sophie & Zertal, Soraya & Goret, Gael, « Auto-tuning of IO accelerators using black-box optimization », 1022-1027. 10.1109/HPCS48598.2019.9188173 (2019).

Ce module cherche à optimiser les lectures et écritures de petits volumes (typiquement moins de 4 kilooctets) mais multiples et concentrés dans le temps, en récupérant en avance des blocs fréquemment accédés pour les mettre en mémoire tampons.

Un autre module disponible peut être le module « Smart Burst Buffer » (SBB), également de la société Atos.

Le choix entre ces deux modules (et d'autres) peut se baser sur une analyse du comportent de l'application vis-à-vis des entrées/sorties. Cette analyse peut être effectuée à partir des séries temporelles issues d'un outil de profilage.

L'invention permet d'exclure de ces séries temporelles les séries aberrantes dont la présence aurait pu perturber l'analyse et provoquer la sélection d'un module d'accélération non optimal.

Par ailleurs, il peut être prévu de déterminer des paramètres du module d'accélération choisi. A titre d'exemple, le module SRO possède 4 paramètres et le module SBB une douzaine.

D'autres paramètres pouvant impacter de façon importante l'exécution d'une application peuvent également être automatiquement déterminées, comme par exemple les paramètres d'un outil de parallélisation (ceux de l'interface MPI, « Message Passing Interface », par exemple), ou encore des paramètres internes à l'application elle-même.

Selon un mode de réalisation, cette étape d'optimisation automatique peut être effectuée de façon itérative.

Ainsi, on exécute plusieurs fois une même application en changeant ses paramètres d'exécution. Au moyen du procédé de l'invention, on peut écarter les aberrations, et considérer le comportement normal de l'application et évaluer différentes performances liées à l'usage d'un ensemble différent de jeu de paramètres.

À chaque itération, les paramètres peuvent être changées de manière déductive, c'est-à-dire en tenant compte des paramètres déjà exécutés. Différentes stratégies sont alors possibles pour parcourir l'espace des valeurs de paramètres possibles afin d'obtenir un jeu de paramètre optimal.

Selon un mode de réalisation, le procédé décrit peut être mis en œuvre par un dispositif de détection de comportement aberrant. Ce dispositif peut être un module logiciel mis en œuvre sur un ordinateur, c'est-à-dire toute plateforme de traitement de l'information. En particulier, cette plateforme peut être mis en œuvre par un ensemble de circuits co-localisés dans un serveur centralisé ou repartis au sein d'un serveur reparti ou parmi un ensemble de serveurs. Cet ensemble de serveurs peut comprendre des arrangements de type « fermes de serveurs » ou d'informatique en nuage (« *cloud computing* »).

Cet ordinateur peut être le même que la plateforme de traitement de l'information sur laquelle sont exécutées les applications supervisées, ou bien une autre plateforme à laquelle elle est connectée via des moyens de communication afin de recueillir les séries temporelles.

L'invention est définie par les revendications.

## Revendications

1. Procédé de détection de comportement aberrant dans un ensemble d'exécutions d'une ou plusieurs applications sur un dispositif de traitement de l'information, ledit procédé étant mis en œuvre par un dispositif de détection de comportement aberrant, lesdits dispositifs étant connectés entre eux via des moyens de communication et compris dans une plateforme de traitement de l'information intégrée à un serveur centralisé ou répartie sur un ensemble de serveurs, ledit procédé comportant des étapes de

   - déclenchement (S1) dudit ensemble d'exécutions en collaboration avec un outil de profilage compris dans ladite plateforme de traitement de l'information et connecté auxdits dispositifs, afin de recueillir, pour chaque exécution, au moins une série temporelle de points de mesure associant, pour chaque point de mesure, une valeur à un paramètre mesuré ;
   - formatage automatique (S2) des séries temporelles obtenues pour ledit ensemble, en ajustant par normalisation, pour chaque série temporelle, sa longueur, ses valeurs et son nombre de points de mesures, ladite normalisation de la longueur comprenant la projection des points de mesure de ladite série temporelle vers un intervalle de référence, ladite normalisation de ses valeurs comprenant la division des valeurs de ladite série numérique par une quantité totale correspondant à l'ensemble des valeurs pour ladite série temporelle et ladite normalisation du nombre de points de mesure comprenant une interpolation d'un ensemble de points de mesures supplémentaires afin que le nombre de points de mesure de ladite série temporelle soit égal au nombre de points de mesure d'une série temporelle plus longue dudit ensemble;
- calcul (S3) d'une métrique entre deux séries temporelles parmi les séries temporelles recueillies pour ledit ensemble d'exécution ;
- détection (S4) d'une aberration à partir d'une comparaison de ladite métrique avec un seuil ;
- exclusion pour une même application des exécutions dudit ensemble pour lesquelles une aberration a été détectée; et
- détermination d'un comportement normal de l'application à partir des exécutions restantes.

2. Procédé selon la revendication précédente, dans lequel le formatage est effectué par couples de séries temporelles au sein dudit ensemble.

3. Procédé selon l'une des revendications précédentes, comportant une fourniture (S5) d'informations correspondant à ladite aberration à un utilisateur via une interface homme-machine.

4. Procédé selon l'une des revendications précédentes, comportant une détermination (S6) automatique de paramètres d'optimisation d'exécution pour une application à partir des exécutions restantes d'une même application , ladite détermination automatique comprenant l'exécution répétée de ladite application avec des ensembles différents de paramètres d'exécution et l'évaluation des performances de l'application liées à l'usage desdits ensembles de paramètres d'exécution en considérant le comportement normal de l'application.

5. Procédé selon l'une des revendications précédentes, comportant une étape de sélection d'un module d'accélération pour une application, à partir des exécutions d'une même application en excluant les exécutions pour lesquelles une aberration a été détectée.

6. Procédé selon la revendication 1, dans lequel ladite quantité totale est une approximation de l'intégrale de ladite série temporelle par rapport au temps.

7. Procédé selon l'une des revendications précédentes, dans lequel ladite métrique est calculée sur les sommes cumulées des valeurs desdites séries temporelles.

8. Programme d'ordinateur comportant des instructions qui, lorsque le programme est exécuté par un ordinateur, provoque la réalisation par ledit ordinateur du procédé selon l'une des revendications précédentes.

9. Dispositif de détection de comportement aberrant dans un ensemble d'exécutions d'une ou plusieurs applications sur un dispositif de traitement de l'information, lesdits dispositifs étant connectés entre eux et compris dans une plateforme de traitement de l'information intégrée à un serveur centralisé ou répartie sur un ensemble de serveurs, ledit dispositif de détection de comportement aberrant comportant des moyens pour :

- déclencher ledit ensemble d'exécutions en collaboration avec un outil de profilage compris dans ladite plateforme de traitement de l'information et connecté auxdits dispositifs, afin de recueillir, pour chaque exécution, au moins une série temporelle de points de mesure associant, pour chaque point de mesure, une valeur à un paramètre mesuré ;
- formater automatiquement les séries temporelles obtenues pour ledit ensemble, en normalisant, pour chaque série temporelle, sa longueur, ses valeurs et son nombre de points de mesures, la normalisation de la longueur comprenant la projection des points de mesures de ladite série temporelle vers un intervalle de référence, la normalisation de ses valeurs comprenant la division des valeurs de ladite série numérique par une quantité totale correspondant à l'ensemble des valeurs pour ladite série temporelle et la normalisation du nombre de points de mesures comprend une interpolation d'un ensemble de points de mesures supplémentaires afin que le nombre de points de mesures de ladite série temporelle soit égal au nombre de points de mesures d'une série temporelle plus longue dudit ensemble ;
- calculer une métrique entre deux séries temporelles parmi les séries temporelles recueillies pour ledit ensemble d'exécution ;
- détecter une aberration à partir d'une comparaison de ladite métrique avec un seuil ;
- exclure pour une même application les exécutions dudit ensemble pour lesquelles une aberration a été détectée; et
- déterminer un comportement normal de l'application à partir des exécutions restantes.

**10.** Dispositif selon la revendication 9, comportant des moyens pour en outre fournir des informations correspondant à ladite aberration à un utilisateur via une interface homme-machine.

**11.** Dispositif selon l'une des revendications 9 ou 10, comportant des moyens pour en outre déterminer automatiquement des paramètres d'optimisation d'exécution pour une application, à partir des exécutions restantes d'une même application, lesdits moyens étant configurés pour exécuter plusieurs fois ladite application avec des ensembles différents de paramètres d'exécution et évaluer les performances de l'application liées à l'usage desdits ensembles de paramètres d'exécution en considérant le comportement normal de l'application.

**Patentansprüche**

**1.** Verfahren zum Erkennen eines abweichenden Verhaltens in einer Reihe von Ausführungen einer oder mehrerer Anwendungen auf einer Informationsverarbeitungsvorrichtung, wobei das Verfahren durch eine Vorrichtung zum Erkennen des abweichenden Verhaltens implementiert wird, wobei die Vorrichtungen über Kommunikationsmittel miteinander verbunden sind und in einer Informationsverarbeitungsplattform enthalten sind, die in einen zentralen Server integriert ist oder über eine Reihe von Servern verteilt ist, wobei das Verfahren die Schritte aufweist:

- Auslösen (S1) der Reihe von Ausführungen in Zusammenarbeit mit einem Profilierungswerkzeug, das in der Informationsverarbeitungsplattform enthalten und mit den Vorrichtungen verbunden ist, um für jede Ausführung mindestens eine Zeitserie von Messpunkten zu erfassen, die für jeden Messpunkt einen Wert mit einem gemessenen Parameter verknüpfen;
- automatisches Formatieren (S2) der Zeitserien, die durch die Reihe erhalten wurden, durch Anpassen ihrer Länge, ihrer Werte und ihrer Anzahl von Messpunkten durch Normalisierung für jede Zeitserie, die Normalisierung der Länge umfassend die Projektion der Messpunkte der Zeitserie auf ein Referenzintervall, die Normalisierung ihrer Werte umfassend die Teilung der Werte der numerischen Reihe durch eine Gesamtmenge, die der Reihe von Werten für die Zeitserie entspricht, und die Normalisierung der Anzahl von Messpunkten umfassend eine Interpolation einer Reihe zusätzlicher Messpunkte, sodass die Anzahl der Messpunkte der Zeitserie gleich der Anzahl von Messpunkten einer längeren Zeitserie der Reihe ist;
- Berechnen (S3) einer Metrik zwischen zwei Zeitserien unter den Zeitserien, die für die Reihe von Ausführungen erfasst werden;
- Erkennen (S4) einer Abweichung aus einem Vergleich der Metrik mit einem Schwellenwert;
- Ausschließen für eine gleiche Anwendung der Ausführungen der Reihe, bei denen eine Abweichung erkannt wurde; und
- Bestimmen eines normalen Verhaltens der Anwendung aus den verbleibenden Ausführungen.

**2.** Verfahren nach dem vorstehenden Anspruch, wobei die Formatierung durch Paare von Zeitserien innerhalb der Reihe erfolgt.

**3.** Verfahren nach einem der vorstehenden Ansprüche, das ein Bereitstellen (S5) von Informationen, die der Abweichung entsprechen, an einen Benutzer über eine Mensch-Maschine-Schnittstelle aufweist.

**4.** Verfahren nach einem der vorstehenden Ansprüche, das ein automatisches Bestimmen (S6) von Ausführungsoptimierungsparametern für eine Anwendung aus den verbleibenden Ausführungen einer gleichen Anwendung aufweist, das automatische Bestimmen umfassend die wiederholte Ausführung der Anwendung mit unterschiedlichen Reihen von Ausführungsparametern und die Bewertung von Leistungen der Anwendung im Zusammenhang mit der Verwendung der Reihen von Ausführungsparametern unter Berücksichtigung des normalen Verhaltens der Anwendung.

**5.** Verfahren nach einem der vorstehenden Ansprüche, das einen Schritt zum Auswählen eines Beschleunigungsmoduls für eine Anwendung aus den Ausführungen einer gleichen Anwendung aufweist, mit Ausnahme der Ausführungen, bei denen eine Abweichung erkannt wurde.

**6.** Verfahren nach Anspruch 1, wobei die Gesamtmenge eine Näherung des Integrals der Zeitserie in Bezug auf die Zeit ist.

**7.** Verfahren nach einem der vorstehenden Ansprüche, wobei die Metrik auf Grundlage der kumulierten Summen der Werte der Zeitserien berechnet wird.

**8.** Computerprogramm, das Anweisungen aufweist, die, wenn das Programm durch einen Computer ausgeführt wird, die Durchführung durch den Computer des Verfahrens nach einem der vorstehenden Ansprüche veranlassen.

**9.** Vorrichtung zum Erkennen des abweichenden Verhaltens in einer Reihe von Ausführungen einer oder mehrerer Anwendungen auf einer Informationsverarbeitungsvorrichtung, wobei die Vorrichtungen miteinander verbunden sind und in einer Informationsverarbeitungsplattform enthalten sind, die in einen zentralen Server integriert ist oder über eine Reihe von Servern verteilt ist, wobei die Vorrichtung zum Erkennen des abweichenden Verhaltens Mittel aufweist zum:

- Auslösen der Reihe von Ausführungen in Zusammenarbeit mit einem Profilierungswerkzeug, das in der Informationsverarbeitungsplattform enthalten und mit den Vorrichtungen verbunden ist, um für jede Ausführung mindestens eine Zeitserie von Messpunkten zu erfassen, die für jeden Messpunkt einen Wert mit einem gemessenen Parameter verknüpfen;
- automatisches Formatieren der Zeitserien, die durch die Reihe erhalten werden, durch Normalisieren ihrer Länge, ihrer Werte und ihrer Anzahl von Messpunkten durch Normalisierung für jede Zeitserie, die Normalisierung der Länge umfassend die Projektion der Messpunkte der Zeitserie auf ein Referenzintervall, die Normalisierung ihrer Werte umfassend die Teilung der Werte der numerischen Reihe durch eine Gesamtmenge, die der Reihe von Werten für die Zeitserie entspricht, und die Normalisierung der Anzahl von Messpunkten umfassend eine Interpolation einer Reihe zusätzlicher Messpunkte, sodass die Anzahl der Messpunkte der Zeitserie gleich der Anzahl von Messpunkten einer längeren Zeitserie der Reihe ist;
- Berechnen einer Metrik zwischen zwei Zeitserien unter den Zeitserien, die für die Reihe von Ausführungen erfasst werden;
- Erkennen einer Abweichung aus einem Vergleich der Metrik mit einem Schwellenwert;
- Ausschließen für eine gleiche Anwendung der Ausführungen der Reihe, bei denen eine Abweichung erkannt wurde; und
- Bestimmen eines normalen Verhaltens der Anwendung aus den verbleibenden Ausführungen.

10. Vorrichtung nach Anspruch 9, die Mittel zum weiteren Bereitstellen von Informationen, die der Abweichung entsprechen, an einen Benutzer über eine Mensch-Maschine-Schnittstelle aufweist.

11. Vorrichtung nach einem der Ansprüche 9 oder 10, die Mittel zum weiteren automatischen Bestimmen von Ausführungsoptimierungsparametern für eine Anwendung aus den verbleibenden Ausführungen einer gleichen Anwendung aufweist, wobei die Mittel zum mehrmaligen Ausführen der Anwendung mit unterschiedlichen Reihen von Ausführungsparametern und Bewerten der Leistungen der Anwendung im Zusammenhang mit der Verwendung der Reihen von Ausführungsparametern unter Berücksichtigung des normalen Verhaltens der Anwendung konfiguriert sind.

**Claims**

1. Method for detecting outlier behavior in a set of executions of one or more applications on an information processing device, said method being implemented by an outlier behavior detection device, said devices being connected to each other via communication means and comprised in an information processing platform integrated in a centralized server or distributed over a set of servers, said method comprising the steps of

- triggering (S1) said set of executions in collaboration with a profiling tool comprised in said information processing platform and connected to said devices, in order to collect, for each execution, at least one time series of measurement points assigning, for each measurement point, a value to a measured parameter;
- automatically formatting (S2) the time series obtained for said set, by adjusting by normalization, for each time series, its length, its values and its number of measurement points, said normalization of the length comprising projecting the measurement points of said time series onto a reference interval, said normalization of its values comprising dividing the values of said numerical series by a total quantity corresponding to the set of values for said time series and said normalization of the number of measurement points comprising interpolating a set of additional measurement points so that the number of measurement points of said time series is equal to the number of measurement points of a longer time series of said set;
- calculating (S3) a metric between two time series among the time series collected for said set of executions;
- detecting (S4) an outlier from a comparison of said metric with a threshold;
- excluding, for the same application, executions of said set for which an outlier was detected; and
- determining normal application behavior from the remaining executions.

2. Method according to the preceding claim, wherein formatting is performed in pairs of time series within said set.

3. Method according to either of the preceding claims, comprising providing (S5) information corresponding to said outlier to a user via a human-machine interface.

4. Method according to any of the preceding claims, comprising automatically determining (S6) execution optimization parameters for an application from the remaining executions of the same application, said automatic determination comprising repeatedly executing said application with different sets of execution parameters and evaluating application performances related to the use of said sets of execution parameters considering the normal behavior of the application.

5. Method according to any of the preceding claims, comprising a step of selecting an acceleration module for an application, from the executions of the same application, excluding the executions for which an outlier was detected.

6. Method according to claim 1, wherein said total quantity is an approximation of the integral of said time series with respect to time.

7. Method according to any of the preceding claims, wherein said metric is calculated on the cumulative sums of the values of said time series.

8. Computer program comprising instructions which, when the program is executed by a computer, cause said computer to perform the method according to any of the preceding claims.

9. Device for detecting outlier behavior in a set of executions of one or more applications on an information processing device, said devices being connected to each other and comprised in an information processing platform integrated into a centralized server or distributed over a set of servers, said outlier behavior detection device comprising means for:

    - triggering said set of executions in collaboration with a profiling tool comprised in said information processing platform and connected to said devices, in order to collect, for each execution, at least one time series of measurement points assigning, for each measurement point, a value to a measured parameter;
    - automatically formatting the time series obtained for said set, by normalizing, for each time series, its length, its values and its number of measurement points, the normalization of the length comprising projecting the measurement points of said time series onto a reference interval, the normalization of its values comprises dividing the values of said numerical series by a total quantity corresponding to the set of values for said time series and the normalization of the number of measurement points comprises interpolating a set of additional measurement points so that the number of measurement points of said time series is equal to the number of measurement points of a longer time series of said set;
- calculating a metric between two time series among the time series collected for said execution set;
- detecting an outlier from a comparison of said metric with a threshold;
- excluding, for the same application, the executions of said set for which an outlier was detected; and
- determining normal application behavior from the remaining executions.

10. Device according to claim 9, comprising means for further providing information corresponding to said outlier to a user via a human-machine interface.

11. Device according to either claim 9 or claim 10, comprising means for further automatically determining execution optimization parameters for an application, from the remaining executions of the same application, said means being designed to execute said application a plurality of times with different sets of execution parameters and to evaluate the application performances related to the use of said sets of execution parameters considering the normal behavior of the application.

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006020924 A1, LO KEVIN H

**Littérature non-brevet citée dans la description**

- **ROBERT, SOPHIE** ; **ZERTAL, SORAYA** ; **GORET, GAEL**. *Auto-tuning of IO accelerators using black-box optimization*, 2019, 1022-1027